# EUROPEAN PATENT APPLICATION

(11) **EP 4 685 644 A1**
(43) Date of publication of application: **28.01.2026**
(21) Application number: 25180831.7
(22) Date of filing: 04.06.2025
(51) Int. Cl.: G06F 9/50

(54) **METHOD AND APPARATUS FOR MIGRATING A WINDOW OF A WINDOW OPERATOR IN A STREAM PROCESSING SYSTEM**

(30) Priority: 11.07.2024 FI 20245879
(71) Applicant: Nokia Solutions and Networks Oy, 02610 Espoo (FI)
(72) Inventor: DA SILVA VEITH, Alexandre, Wilrijk (BE); DOBBELAERE, Philippe, Ranst Broechem (BE)
(74) Representative: Nokia EPO representatives

(57) **Abstract**

A migration method is disclosed for migrating a first window of a first window operator (610) from a first host (H1) to a second host (H2). A reconfiguration manager is configured to initiate and manage a migration, comprising creating a second window operator (620) in the second host (H2) and the second window operator (620) having a second window associated with a second window state. The first and the second window operators are configured to receive a stream of data units, add the data units to the first and, respectively, the second window states, and trigger the first and, respectively, the second windows to process or discard the data units in the first and respectively the second window states. The method comprises synchronizing the first and the second window states so that the first and the second window states are consistent upon completion of the migration, wherein completion of the migration comprises starting processing data units by the second window operator and discarding data units by the first window operator.

## Description

### TECHNICAL FIELD

Various example embodiments relate generally to apparatus and methods for migrating a window of a window operator in a stream processing system.

### BACKGROUND

A stream processing system is a type of computing architecture designed to process and analyze, in real-time or near-real-time, continuously flowing streams of data units produced by one or more data sources. It allows for the continuous ingestion, consumption, processing, and output of data units as they arrive, enabling timely and responsive data-driven actions and insights.

For example, in real-time analytics, there is a need to execute elaborated applications (e.g., object tracking, face recognition, anomaly detection) over unbounded and high-speed data streams. Stream processing systems enable such stringent application requirements and needs by leveraging a scalable and distributed architecture. A stream processing application can be seen as an application dataflow in which vertices are operators that execute a function over incoming data units and whose edges define how the data units flow between the operators. Data units are sometimes also referred to as events or tuples. The application dataflow can have one or multiple data sources (e.g., sensors, gateways, or actuators) and one or more operators that perform a computational task on incoming data units (e.g., filtering, aggregations, joins). Operators are typically hosted by one or more hosts in a network, which may include, e.g., edge devices in a private network and cloud devices in the cloud.

Such applications are long-running, pruned to infrastructure conditions, and the workload fluctuates over time (e.g., a smart traffic light has higher computing needs during the day than at night). To adapt to the changes, there can be a need to rearrange the application deployment amongst hosts. For example, in the case of a private network comprising industrial sensors and edge devices, when resources are available at the edge devices, it can be advantageous to use such resources to redeploy operators rather than using resources in the cloud, which are usually charged with a pay-as-you-go model.

In stream processing systems, the concept of windowing is used to divide the unbounded dataflow produced by the data sources into finite chunks for processing. These finite chunks are commonly referred to as windows and an operator that applies such windowing concept to handle an incoming stream of data units is referred to as a window operator. Each window operator can have one or more windows of one or more window sizes. The window size can be adaptive, meaning that the window size can change over time, for example, depending on the incoming stream of data units or depending on available resources (for example, when the bandwidth increases, it is possible to retain fewer data units and therefore to use smaller window sizes).

Rearranging the deployment of an application can include changing the host (i.e., move from one physical computational machine to another or from one computational task to another) of one or more windows of an operator. This process is referred to as migration in the following of the description.

There is a need for an efficient method to migrate an adaptive window from one host to another.

### SUMMARY

According to some aspects, the subject matter of the independent claims is provided. Some further aspects are defined in the dependent claims.

According to a first aspect, a migration method is disclosed for use in a stream processing system comprising at least a reconfiguration manager, a first host and a second host. The first host hosts at least a first window operator having a first window associated with a first window state. The reconfiguration manager is configured to initiate and manage a migration of the first window of the first window operator from the first host to the second host. This migration comprises creating a second window operator at the second host. The second window operator has a second window associated with a second window state. The first and second window operators are configured to receive a stream of data units, add the data units to the first and, respectively, the second window states, and trigger the first and, respectively, the second window to process or discard the data units in the first and respectively the second window states. The method comprises synchronizing the first and the second window states so that the first and the second window states are consistent upon completion of the migration, wherein completion of the migration comprises starting processing data units by the second window operator and discarding data units by the first window operator.

By synchronizing the window states of the first and the second window operators, it is possible to ensure that no data unit is lost and no data unit is duplicated during the migration, including when the windows are adaptive or have different sizes.

A loss of a data unit happens when the data unit is discarded by the first window operator and is not processed by the second window operator. It results in the data unit not being part of the computation of any window. Similarly, a duplication of a data unit happens when the first and the second window operators both process the data unit, which results in the data unit being part of the computation of several windows. Data losses and data duplications can impact the outcome of the computation drastically.

For example, the loss of a data unit from a vehicle, a drone, or a robot that contains an over-voltage fault alert or a crash alert can be catastrophic. Redundant data units also exert a harmful influence on data feature extraction in anomaly detection algorithms. For example, they generate outliers when computing aggregations (e.g., aggregations-based comparison of computed mean and/or median against thresholds). This is disastrous in mission-critical applications such as autonomous driving or controlling a robot arm.

The disclosed migration method allows to keep the state of window operators consistent and correct upon migration, therefore avoiding losses and duplications while keeping the downtime limited.

Keeping the migration downtime limited is a key requirement for applications that need continuous throughput and maintain the end-to-end latency within a certain range. With the disclosed method, the downtime due to migration is limited because the application flow doesn't need to be stopped for a long period to achieve the migration: instead, the first window operator continues processing the data units until the completion of the migration at which point in time processing is switched over to the second window operator.

The disclosed migration method can advantageously be used when migrating a first window from a cloud device to an edge device. Indeed, the edge device is likely to have less capacity, e.g., less memory than the cloud device, and therefore, the second window may need to be smaller than the first window.

For example, processing the data units in the first or the second window state comprises performing a computational task, and the migration of the first window comprises migrating the first window state and the computational task.

The computational task has to be instantiated to receive the first window state.

In a first embodiment of the disclosed migration method, synchronizing the first and the second window states comprises receiving a synchronization marker in the stream of data units and causing a window trigger based on said synchronization marker.

In a first implementation variant of the first embodiment of the disclosed migration method, the reconfiguration manager is further configured to create a temporary window operator before initiating the migration of the first window to the second host, the temporary window operator being configured as an upstream window operator with respect to the first and the second window operators. Then, a synchronization marker is inserted by said temporary window operator in the stream of data units received by the first and the second window operators

For example, the temporary window operator is configured to extract metadata associated with the data units of the stream of data units and operate based on the metadata. Alternatively, the temporary operator operates based on the data units of the stream of data units.

In a second implementation variant of the first embodiment, the first window operator is configured to duplicate the stream to be migrated, to transfer the duplicated stream to the second window operator when the migration is initiated, and to insert the synchronization marker in the duplicated stream when the first window triggers.

Causing a window to trigger means that an operator (the temporary window operator in the first variant or the first window operator in the second variant) can initiate a window to release the data units contained in its window state to a function for iterating and computing results. The temporary window operator in the first variant, or the first window operator in the second variant, remotely initiates the window of the second window operator to release the data units contained in its window state by sending a synchronization marker.

In a second embodiment of the disclosed migration method, synchronizing the first and the second window states comprises configuring the same fixed window size for the first and the second windows during the migration. For example, when the first and the second window have respectively a first and a second window size, and the fixed window size is determined by the reconfiguration manager as the smallest of the first and the second window sizes.

The first embodiment is particularly suited for threshold-based and delta-based window operators. Indeed, threshold-based and delta-based window operators analyze the window state of the window operator to identify variations in the distribution of the data units and trigger the window when a certain requirement is met. This requires using adaptive windows, which is not supported in the second embodiment, wherein a fixed-size window is configured during the migration. The second embodiment can advantageously be used for micro-batching, joins, or tumbling window operators, which don't have the same constraint.

According to a second aspect of the disclosure, an apparatus is disclosed comprising at least one processor and at least one memory-storing instructions that, when executed by at least one processor, cause the apparatus at least to perform synchronizing the first and second window states before completion of the migration, for the execution of the migration method disclosed herein.

According to a third aspect of the present disclosure, a computer program is disclosed comprising instructions which, when executed by an apparatus, cause the apparatus to perform synchronizing the first and second window states before completion of the migration for the execution of the migration method disclosed herein.

According to a fourth aspect of the present disclosure, a non-transitory storage medium is also disclosed comprising instructions which, when executed by an apparatus, cause the apparatus to perform synchronizing the first and second window states before completion of the migration, for the execution of the migration method disclosed herein.

An advantage of the disclosed migration method is that it enables parallelization of the operations of the first and the second window operators, which are needed to conduct the migration while avoiding loss or duplication of data units, minimizing downtime and exchanges of control messages. Limiting control messages is important in the context of edge-cloud computing as the reconfiguration manager can be far away from the first and the second hosts.

### BRIEF DESCRIPTION OF THE DRAWINGS

Example embodiments will become more fully understood from the detailed description given herein below and the accompanying drawings, which are given by way of illustration only and thus are not limited to this disclosure.
FIG.1 is a block diagram representing an exemplary architecture of a stream processing system.
FIG.2 is an explanatory diagram of how an operator works in a stream processing system.
FIG.3 and FIG.4 are flow charts of a first and, respectively, a second migration method, where the migration downtime is illustrated.
FIG.5 is a diagram illustrating the phenomenon of loss and duplication of data units with the migration method of FIG.4.
FIG.6 is a block diagram of the first variant of the first embodiment of the migration method, as disclosed herein.
FIG.7 is a time diagram showing, for a specific example, the evolution of the first and second window states during the migration, with the migration method of FIG.6.
FIG.8 is a block diagram of a second variant of the first embodiment of the migration method, as disclosed herein.
FIG.9 is a time diagram showing, for a specific example, the evolution of the first and second window states during the migration, with the migration method of FIG.8.
FIG.10 is a time diagram showing, for a specific example, the evolution of the first and second window states during the migration, with a second embodiment of the migration method as disclosed herein.
FIG.11 is a schematic block representation of an apparatus for implementing a various devices as disclosed herein, for example, a host as described with reference to FIG1.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

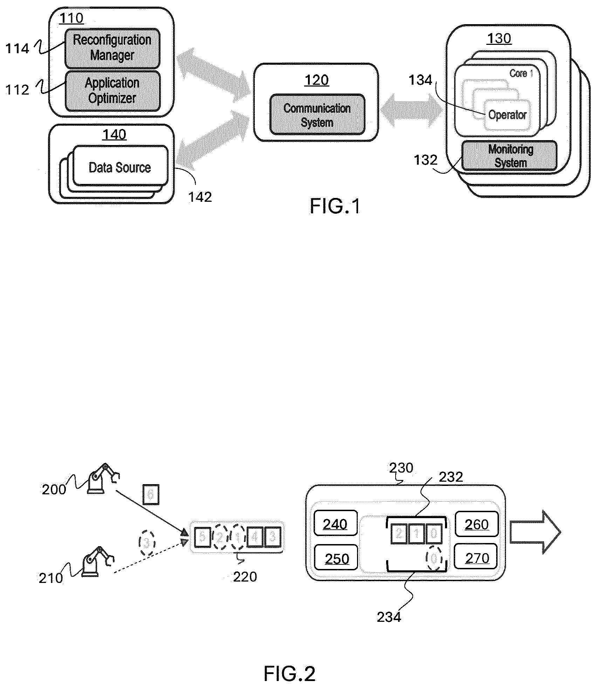

FIG.1 is a block diagram representing an example of a typical stream processing system. The stream processing system of FIG.1 comprises a host 110 hosting an application optimizer 112 and a reconfiguration manager 114, a host 120 hosting a communication system 120, one or more hosts 130 hosting a monitoring system 132 and application operators 134, and a host 140 hosting one or more data sources 142.

In a typical implementation, initially, the application optimizer 112 receives the application dataflow and deploys its operators in a single or multiple hosts 130. Then, the monitoring system of each of the hosts 130 keeps track of performance metrics, such as application latency, throughput, monetary cost, resource utilization, among others. Afterwards, the application optimizer 112 receives the collected metrics and does runtime optimizations (e.g., cost reduction and throughput maximization). When a new deployment is needed, the application optimizer 112 sends a new application deployment request to the reconfiguration manager 114. The reconfiguration manager 114 manages the reconfiguration of the application deployment.

Reconfiguration can consist of migrating an operator from one host to another (which typically implies moving a database/in-memory state and a task), creating/removing operator replicas, and redistributing the workload across operator replicas. It can involve migrating one or more windows of operators. The control plane manages the exchange of reconfiguration control messages or performance metrics, while the data plane handles the application messages (which include the data units). Message exchanges in the data and control planes utilize the communication system 120, which can happen via, e.g., sockets and/or shared memory and/or messages and/or message brokers.

FIG.2 illustrates an example of a keyed window operator. In this example, a robot 200 produces data units of a first type, and a robot 210 produces data units of a second type. The first and the second types are associated with a first and a second key, respectively, represented in the figures by a square and an ellipse, respectively. The produced data units constitute a dataflow that is stored in queue 220 of a window operator 230. The queue 220 of operator 230 is a data structure that temporarily holds data units as they arrive at the window operator and before they are processed. The window operator 230 has two windows: a square window, which is associated with a window state 232 to which the data units of the first type are added (key = square), and an ellipse window associated with a window state 234 to which the data units of the second type are added (key = ellipse). A window state, in the context of a window operating system, refers to data that are temporarily stored during the duration of the window. The window state is maintained for the duration of the window and is reset or updated as the window expires. In the example of FIG.2, the window state 232 contains three squares labeled 0, 1, and 2. The window state 234 contains one ellipse labeled 0. The operator queue 220 contains two squares labeled 3 and 4, followed by two ellipses labeled 1 and 2, followed by one square labeled 5. A square labeled 6 is being transmitted by the robot 200 to the queue 220 and an ellipse labeled 3 is being transmitted by the robot 210 to queue 220.

As shown in FIG.2, the keyed window operator 230 comprises an assigner 240, which assigns data units of the queue 220 to a window (in this example, it assigns the data units of the first type to the square window 231 and the data units of the second type to the ellipse window 233). The window operator 230 further comprises a trigger 250, a function 260, and an evictor 270. The trigger 250 decides whether a window has reached its end and triggers that window. Triggering a window results in processing the data units in the associated window state by calling the function 260 or discarding the data units in the associated window state by calling the evictor 270.

For example, a window can be count-based, time-based, session-based, etc. In the case of a count-based window, for example, the window reaches its end when the window state comprises a given number of N data units (N being an integer). For example, the window can be triggered for every N data units for the window operator to perform its function, e.g., computing averaged values for every N data units.

The size of a window can be set dynamically to adapt to changes in, e.g., the network, memory and/or computing capacities. For example, the size of a window can be determined by the amount of memory available in sensors, cameras and/or edge devices. It can be adapted to bandwidth constraints and/or data drifts. It can be adapted for optimization towards achieving the full processing capacity of the host device. Adaptive windowing is particularly attractive for meeting the constraints and requirements of wireless sensor networks, the Internet of Things, and edge computing scenarios.

In the following of the description several migration methods will be described with reference to the accompanying drawings for migrating a first window of a first operator from a first host to a second host. The first host will be referenced H1, and the second host will be referenced H2 across all drawings.

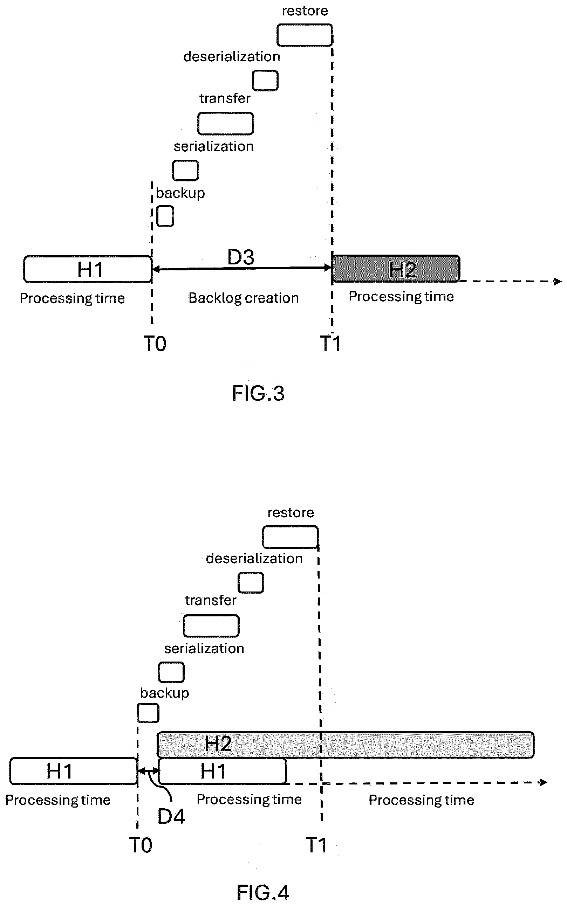

FIG.3 is a schematic representation of the steps of a first method for migrating a first window from a first host H1 to a second host H2. The migration is initiated by the reconfiguration manager 114 at initiation time T0 and is completed at completion time T1. Before initiation time T0, the data units are processed by the first window operator (hosted by the first host H1). Processing is stopped from initiation time T0 to completion time T1 to perform the migration. Finally, after completion time T1, the processing of the data units is resumed by a second window operator hosted by the second host H2. This first method allows a consistent migration of adaptive window operators, but this is at the cost of a significant downtime D3 and a significant backlog (the data sources keep producing data while the processing is stopped).

FIG.4 is a schematic representation of the steps of a second method for migrating a first window from a first host H1 to a second host H2, where the first window operator and the second window operator consume data units in parallel during most of the migration, the first window operator processing the data units when the first window triggers and the second window operator discarding the data when the second window triggers. Then, after completion time T1, the roles are reversed: the first window operator discards the data units when the first window triggers, and the second window operator processes the data units when the second window triggers. As depicted in FIG.4, with this second migration method, processing is only stopped for a short time during which:
- The data units received by the second window operator are buffered.
- A backup of the first window state is done.
- The backup of the first window state is restored into the second window state.
- And the buffered data units are added to the second window state.

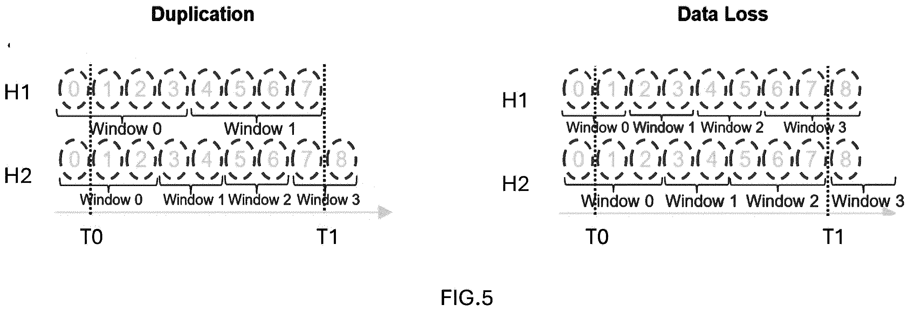

Using this approach, the downtime D4 is limited, but when the stream processing system uses adaptive window operators, there is a risk of loss or duplication of data units as the first and the second window states may not be consistent at completion time T1. Such a situation is described with reference to FIG.5.

In FIG.5, the migrated window is the ellipse window 233 of FIG.2. The lefthand side of FIG.5 depicts an exemplary situation where a data unit (the ellipse labeled 7) is duplicated. Indeed, in this example, at completion time T1, the first window state is full (the first window size is 4, and the first window state comprises ellipses labeled 4, 5, 6, and 7). Therefore, the first window triggers and the ellipses labeled 4, 5, 6, and 7 are processed by the first window operator at the first host H1. At the same time, the second window state at the second host H2 contains one ellipse labeled 7. As the second window size is 2, the second window state is not full yet. The ellipse 7 will be processed by the second window operator when the second window triggers (in the example depicted in FIG.5, this happens when the ellipse labeled 8 is added to the second window state after the completion time T1. At that point in time, the ellipses labeled 7 and 8 are processed by the second window operator at the second host H2. As a result, the ellipse labeled 7 is processed twice: once by the first window operator and once by the second window operator.

The right-hand side of FIG.5 depicts a situation where two data units are lost (the ellipses labeled 6 and 7). Indeed, in this example, at completion time T1, the first window state isn't full (the first window size is 3, and the first window state comprises only two ellipses labeled 6 and 7). Therefore, the first window doesn't trigger, which results in ellipses labeled 6 and 7 not being processed by the first window operator at host H1 (the last ellipse processed by the first window operator is the ellipse labeled 5). At the same time, the second window state at the second host H2 is full (it comprises three ellipses labeled 5, 6, and 7, and the second window size is 3). Therefore, the second window triggers, and the ellipses labeled 5, 6, and 7 are discarded by the second window operator. The next ellipse labeled 8 will then be added to the second window state and will be processed after completion time T1 by the second window operator. As a result, the ellipses labeled 6 and 7 are neither processed by the first window operator at host H1 nor by the second window operator at host H2.

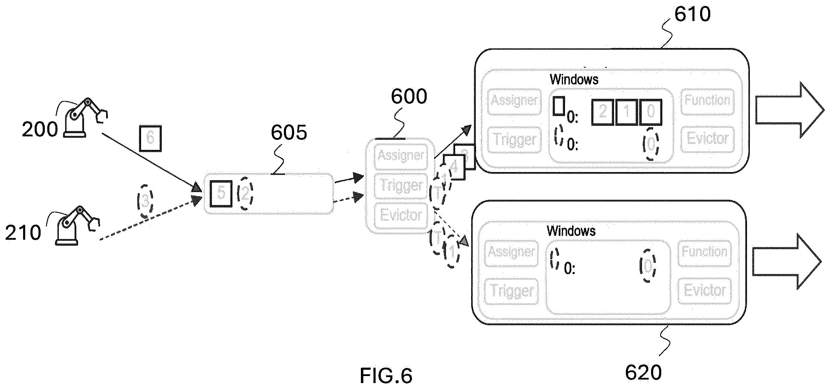

FIG.6 to 10 illustrate by way of example the migration of the ellipse window of FIG.2 with various embodiments of the migration method as disclosed herein.

The migration methods disclosed with reference to FIG.6 to FIG.9 comprise synchronizing the first and the second window states to ensure that they are consistent upon completion of the migration, i.e., when starting processing data units by the second window operator and discarding data units by the first window operator. These methods combine the advantage of limiting downtime by parallelizing the consumption of data units by the first and the second window operators during migration and ensuring that the first and the second window states are consistent at completion time to avoid any loss or duplication of data units.

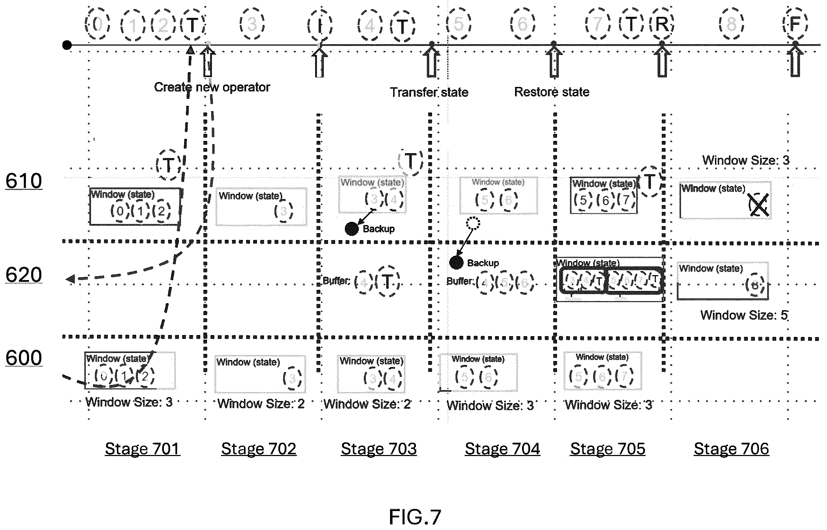

In a first embodiment described with reference to FIG.6 and FIG.7, synchronizing the first and the second window states is achieved by adding a synchronization marker in the incoming stream of data units and causing the first and the second windows to trigger based on the synchronization marker.

A first implementation variant of the first embodiment will now be described with reference to FIG.6 and FIG.7, respectively.

As depicted in FIG.6, the reconfiguration manager creates a temporary window operator 600 before initiating the migration of the first window operator 610 to the second host H2. The temporary operator can be located anywhere in the system. For example, the reconfiguration manager may have a user-defined policy saying that the temporary operator 600 shall be located in a host that reduces communication with the first and the second hosts. The first host and second hosts are potential candidates for the temporary operator 600. The temporary window operator 600 has a queue 605 and is configured as an upstream window operator with respect to the first window operator 610. The temporary window operator 600 ingests from its queue 605 the data units of the first and the second types (squares and ellipses) produced by the two robots 200 and 210. And it transfers the ingested data units to the first window operator 610. At the first window, operator 610, the data units of the second type (the ellipses) are assigned to the first window (the ellipse window). When the migration is initiated, the reconfiguration manager creates a second window operator 620 in the second host H2. The second window operator 620 is configured as a downstream window operator with respect to the temporary window operator 600. Then, the temporary window operator 600 starts transferring the ingested data units of the second type (the ellipses) to a buffer of the second window operator 620. Then, a backup of the first window state is created and restored to the second window state. After the backup has been restored, the content of the buffer is added to the second window state. When its own window triggers, the temporary operator adds a synchronization marker T in the stream of data units of the second type (ellipse) before transferring to both the first and the second window operators 610 and 620. The synchronization marker will arrive in the same sequence at the first and the second window operators 610 and 620. Upon reception of a synchronization marker T, the first window operator triggers the first window, and the second window operator triggers the second window. This results in aligning the first and the second window states. In this embodiment, the temporary operator 600 behaves as a single source of truth for the first and the second window operators 610 and 620.

Rather than operating based on the data units in queue 605, the temporary operator 600 can operate based on metadata associated with the data units in queue 605 (the temporary window operator 600 is configured to maintain a table of the metadata).

FIG.7. provides a concrete example of how the first and second window states evolve during the migration, with the migration method disclosed by reference to FIG.6.

At stage 701, the temporary window operator 600 and the first window operator 610 are operating. Their window state is identical and comprises three ellipses labeled 0, 1, and 2. The window state is full (window size 3), causing the temporary window and the first window to trigger and the ellipses labeled 0, 1, and 2 to be processed by the first window operator 610. The temporary operator 600 adds a first synchronization marker T to the stream after the ellipse labeled 2. This triggers the reconfiguration manager to create the second window operator 620 in the second host H2.

At stage 702, the ellipse labeled 3 is ingested by the temporary and the first window operators 600 and 610 and added to their window state. When the reconfiguration manager has successfully created the second window operator 620, it inserts an initiation marker I in the stream. In the example of FIG.7, the initiation marker is inserted after the ellipse labeled 3. Also, at stage 702, the size of the window of the temporary window operator 600 is adapted: it changes from 3 at stage 701 to 2 at stage 702.

At stage 703, upon reception of the initiation marker I, the first window operator 610 triggers a backup of its window state (which comprises the ellipse labeled 3). A new ellipse labeled 4 arrives in the stream. It is added to the window states of the temporary and the first window operators 600 and 610. The window states of the temporary and the first window operators 600 and 610 now comprise two ellipses labeled 3 and 4. As the window size of the temporary operator is 2, it triggers, and the temporary window operator 600 adds a second synchronization marker T to the stream after the ellipse labeled 4. The second synchronization marker T causes the window of the first window operator 610 to trigger resulting in the ellipses labeled 3 and 4 to be processed by the first window operator 610. Meanwhile, as the backup of the first window state has not yet been restored into the second window state, the ellipse labeled 4 and the second synchronization marker T are buffered by the second window operator 620.

At stage 704, the window size of the temporary window operator 600 is adapted again and changes from 2 back to 3. Two ellipses labeled 5 and 6 arrive in the stream. They are added to the window states of the temporary window operator 600, and the first window operator 610, and they are buffered by the second window operator 620 (the backup of the first window state is still not restored into the second window state). The window states of the temporary and the first window operator 600 and 610 are buffered by the second window operator 620. The buffer of the second window comprises the two ellipses labeled 5 and 6, and the buffer of the window operator 620 comprises the four ellipses labeled 4, T, 5, and 6.

At stage 705, the backup of the first window state (ellipse labeled 3) is restored into the second window state. The content of the buffer (ellipses labeled 4, T, 5, and 6) is added to the second window state so that the second window state comprises the ellipses labeled 3, 4, T, 5, and 6. The second synchronization marker T triggers the second window, resulting in the ellipses labeled 3 and 4 being discarded. Meanwhile, one ellipse labeled 7 arrives in the stream and is added to the window states of the temporary window operator 600, the first window operator 610, and the second window operator 620. As the window size of the temporary window operator is 3, the window of the temporary window operator 600 triggers, and a third synchronization marker T is added to the stream after the ellipse labeled 7. This causes the window of both the first and the second window operators to trigger so that the ellipses labeled 5, 6, and 7 are processed by the first window operator 610, and discarded by the second window operator 620. At that point, the reconfiguration manager adds a resume configuration marker R to the stream to trigger the completion of the migration and kills the temporary window operator 600. From that point and until a finished configuration marker F is added to the stream by the reconfiguration manager, the first window operator 610 discards ellipses, and the second window operator processes ellipses.

From this example, it can be understood that even if the window size is adaptive (it moves from 3 to 2 and back to 3 during the migration), the temporary window operator allows to set a single source of truth by inserting synchronization markers T in the stream to control triggering of the windows of the first and the second window operators, such that they trigger at the same point in the sequence of ellipses which results in no ellipse being lost or duplicated.

The creation of a temporary window operator permits to maintain consistency between the first and the second window states, but it requires an additional reconfiguration to set up the temporary window operator 600, and an additional processing by the temporary window operator 600 (which can be limited to maintaining a table of metadata when the temporary window operator 600 operates based on the metadata rather than the data units).

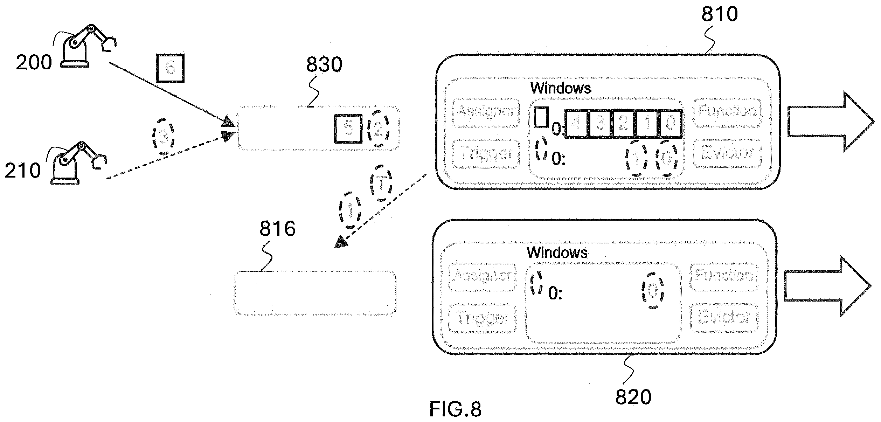

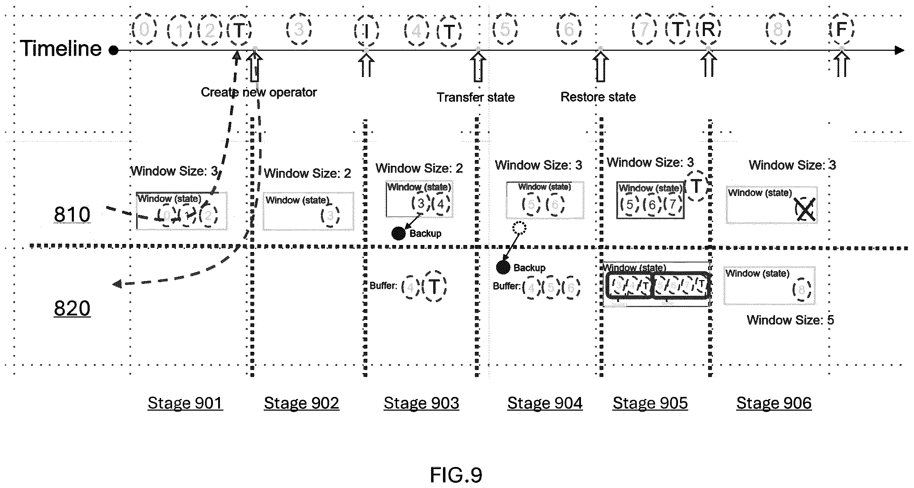

A second implementation variant of the first embodiment will now be described with reference to FIG.8 and FIG.9, respectively, which doesn't require a temporary window operator to be created.

In this second variant, the first window operator 810 is configured to transfer the stream assigned to the window to be migrated (the ellipse window) to queue 816 of the second window operator 820. The synchronization markers T are inserted in the transferred stream (the stream of ellipses) by the first window operator 810 when its window triggers. And upon processing a synchronization marker T, the second window operator 820 triggers its own window. This results in aligning the first and the second window states. In this embodiment, the first window operator 810 controls the window triggering by the second window operator 820 with respect to the second window state. In FIG.8, the queue of the first window operator 810 is referenced as 830.

FIG.9. provides a concrete example of how the first and second window states evolve during the migration, with the migration method disclosed by reference to FIG.8.

At stage 901, only the first window operator 610 is operating. Its ellipse window has a size of 3, and the associated window state (the first window state) comprises three ellipses labeled 0, 1, and 2. Therefore, the first window state is full, causing the first window to trigger and the ellipses labeled 0, 1, and 2 to be processed by the first window operator 610. The first window operator 810 adds a first synchronization marker T to the stream after the ellipse labeled 2. This triggers the creation of the second window operator 820 at the second host H2 by the reconfiguration manager.

At stage 902, the ellipse labeled 3 is ingested by the first window operator 810, and added to the first window state. When the reconfiguration manager has successfully created the second window operator 820, it inserts an initiation marker I in the stream. In the example of FIG.8, the initiation marker is inserted after the ellipse labeled 3. Also, at stage 902 the size of the window of the first window operator 810 is adapted: it changes from 3 at stage 901 to 2 at stage 902.

At stage 903, upon reception of the initiation marker I, the first window operator 810 triggers a backup of its window state (which comprises the ellipse labeled 3). A new ellipse labeled 4 arrives in the stream. It is added to the first window state, which now comprises two ellipses labeled 3 and 4. As the window size of the first window operator is 2, the first window triggers, resulting in the two ellipses labeled 3 and 4 being processed by the first window operator 810. The trigger of the first window also causes the first window operator 810 to add a second synchronization marker T to the stream after the ellipse labeled 4 for transfer to the second window operator 820. As the backup of the first window state has not yet been restored into the second window state, the ellipse labeled 4 and the second synchronization marker T are buffered by the second window operator 820.

At stage 904, the window size of the temporary window operator 600 is adapted again and changes from 2 back to 3. Two ellipses labeled 5 and 6 arrive in the stream. They are added to the first window state, and they are buffered by the second window operator 820 (the backup of the first window state is still not restored into the second window state). The first window state comprises the two ellipses labeled 5 and 6, and the buffer of the window operator 820 comprises the four ellipses labeled 4, T, 5, and 6.

At stage 905, the backup of the first window state (ellipse labeled 3) is restored into the second window state. The content of the buffer (ellipse labeled 4, T, 5, and 6) is added to the second window state so that the second window state comprises the ellipses labeled 3, 4, T, 5, and 6. The second synchronization marker T triggers the second window, resulting in the ellipses labeled 3 and 4 being discarded by the second window operator 820. Meanwhile, one ellipse labeled 7 arrives in the stream and is added to the first and second window states. As a result, the first window state contains the three ellipses labeled 5, 6, and 7. As the window size is 3, the first window triggers, and a third synchronization marker T is added to the stream, being transferred to the second window operator 820. The ellipses 7 and T are added to the second window state, and the third synchronization marker T causes the second window to trigger, which results in the ellipses 5, 6, and 7 being discarded by the second window operator 820.

At that point, the reconfiguration manager adds a resume configuration marker R to the stream to trigger the completion of the migration. From that point and until a finished configuration marker F is added to the stream by the reconfiguration manager, the first window operator 810 discards ellipses, and the second window operator processes ellipses.

From this example, it can be understood that even if the window size is adaptive (it moves from 3 to 2 and back to 3 during the migration), consistency between the first and second window states can be achieved by having the first window operator controlling triggering of the second window in the second window operator 820.

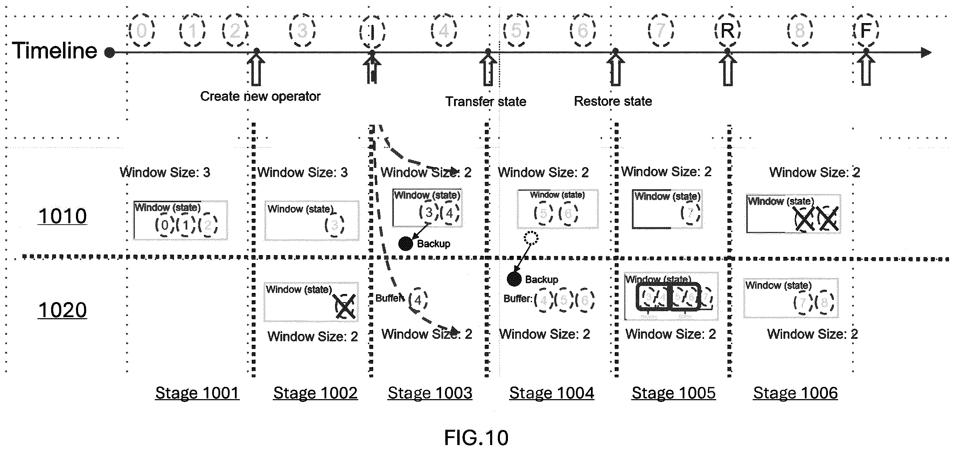

A second embodiment of the disclosed method will now be described with reference to FIG.10. In this second embodiment, synchronizing the first and the second window states is achieved by configuring the same fixed window size for the first and the second window during the migration. For example, the fixed window size is determined by the reconfiguration manager as the smallest of the first and the second window sizes.

At stage 1001, only the first window operator 1010 is operating. Its ellipse window has an initial size of 3, and the associated window state (the first window state) comprises 3 ellipses labeled 0, 1, and 2. Therefore, the first window state is full, causing the first window to trigger and the ellipses labeled 0, 1, and 2 to be processed by the first window operator 1010.

At stage 1002, the reconfiguration manager creates the second window operator 1020, which has an initial window size of 2. The ellipse labeled 3 is ingested by the first window operator 1010. As the migration has not yet been initiated by the reconfiguration manager (initiation market I has not been received yet), the ellipse labeled 3 is discarded by the second window operator 1020. After the ellipse labeled 3, the reconfiguration manager inserts an initiation marker I in the stream.

At stage 1003, upon reception of the initiation marker I, the first window operator sets the size of its first window to 2 to align with the size of the second window in the second window operator 1020. The size of the first and the second windows are fixed for the duration of the migration to the value 2, which is the minimum of the initial size of the first and the second windows (3 and 2, respectively). In addition, the first window operator 1010 triggers a backup of its window state (which comprises the ellipse labeled 3). A new ellipse labeled 4 arrives in the stream. It is added to the first window state, which now comprises two ellipses labeled 3 and 4. As the window size of the first window operator is now 2, the first window triggers, resulting in the two ellipses labeled 3 and 4 being processed by the first window operator 1010. As the backup of the first window state has not yet been restored into the second window state, the ellipse labeled 4 is buffered by the second window operator 1020.

At stage 1004, two ellipses labeled 5 and 6 arrive in the stream. They are added to the first window state, and they are buffered by the second window operator 1020 (the backup of the first window state is still not restored into the second window state). The first window state comprises the two ellipses labeled 5 and 6, and the buffer of the window operator 1020 comprises the three ellipses labeled 4, 5, and 6. The window of the first window operator is full, and therefore, it triggers, causing the ellipses labeled 5 and 6 to be processed by the first window operator 1010.

At stage 1005, the backup of the first window state (ellipse labeled 3) is restored into the second window state. The content of the buffer (ellipses labeled 4, 5, and 6) is added to the second window state so that the second window state comprises the ellipses labeled 3, 4, 5, and 6. The second window triggers twice: once for the ellipses labeled 3 and 4 and once for the ellipses labeled 5 and 6, causing all four ellipses 3, 4, 5, and 6, to be discarded by the second window operator 1020. Then, one ellipse labeled 7 arrives in the stream and is added to the first and second window states, which now have the same content: the ellipse labeled 7.

At that point, the reconfiguration manager adds a resume configuration marker R to the stream to trigger the completion of the migration. From that point and until a finished configuration marker F is added to the stream by the reconfiguration manager, the first window operator 1010 discards ellipses, and the second window operator processes ellipses. For example, at stage 1006, the ellipse labeled 8 arrives in the stream and is added to the first and second window states, causing the windows to trigger. As a result, the ellipse labeled 7 and 8 are discarded by the first window operator 1010, and processed by the second window operator 1020.

Imposing an identical, fixed window size for the first and the second window during the duration of the migration permits achieving consistency in the window states and avoiding losing or duplicating data units.

In the above examples, the reconfiguration manager monitors the backlog. When the number of data units in the queues of the temporary, first, and/or second operators is below a threshold, it adds the reconfiguration marker R to the stream.

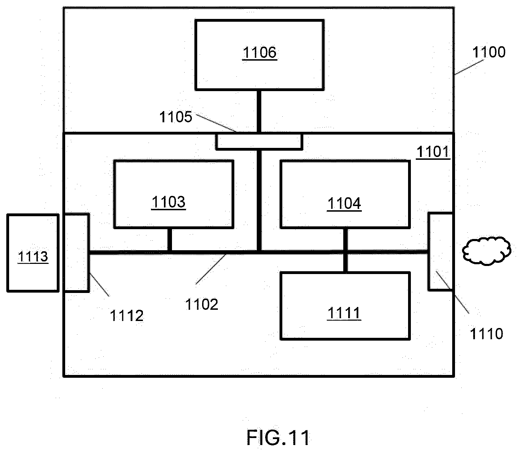

FIG.11 depicts a high-level block diagram of an apparatus 1100 suitable for implementing various aspects of the disclosure. For example, a host, as disclosed above, can be implemented in the form of apparatus 1100. Although illustrated in a single block, in other embodiments the apparatus 1100 can also be implemented using parallel and/or distributed architectures, for example, it can be distributed on different hardware platforms and/or different locations.

According to an exemplary embodiment depicted in FIG.11, apparatus 1100 comprises a printed circuit board 1101 on which a communication bus 1102 connects a processor 1103 (e.g., a central processing unit "CPU"), a random access memory 1104, a storage medium 1111, possibly an interface 1105 for connecting one or more input/output devices 1106 such as a display, a mouse or trackpad, a keyboard, etc... a wireless network interface 1110 and/or a wired network interface 1112. Depending on the use case, the apparatus may implement only part of the above. Certain modules of FIG.7 may be internal or connected externally, in which case they do not necessarily form an integral part of the apparatus itself. E.g., a display may be connected to the apparatus only under specific circumstances or the apparatus may be controlled through another device with a display, i.e., no specific display and interface 1105 are required for such an apparatus. Memory 1111 contains software code that, when executed by processor 1103, causes the apparatus to perform the methods described herein. In an exemplary embodiment, a detachable storage medium 1113, such as a USB stick, may also be connected. For example, the detachable storage medium 1113 can hold the software code to be uploaded to memory 1111.

The processor 1103 may be any type of processor, such as a general-purpose central processing unit ("CPU") or a dedicated microprocessor, such as an embedded microcontroller or a digital signal processor ("DSP").

In addition, apparatus 1100 may also include other components typically found in computing systems, such as an operating system, queue managers, device drivers, or one or more network protocols that are stored in memory 1111 and executed by the processor 1103.

Although aspects herein have been described with reference to particular embodiments, it is to be understood that these embodiments are merely illustrative of the principles and applications of the present disclosure. It is, therefore, to be understood that numerous modifications can be made to the illustrative embodiments and that other arrangements can be devised without departing from the spirit and scope of the disclosure as determined based on the claims and any equivalents thereof.

For example, the data disclosed herein may be stored in various types of data structures that may be accessed and manipulated by a programmable processor (e.g., CPU or FPGA) that is implemented using software, hardware, or a combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes that may be substantially implemented by circuitry.

Each described function, engine, block, and step can be implemented in hardware, software, firmware, middleware, microcode, or any suitable combination thereof. If implemented in software, the functions, engines, blocks of the block diagrams and/or flowchart illustrations can be implemented by computer program instructions /software code, which may be stored or transmitted over a computer-readable medium or loaded onto a general-purpose computer, special purpose computer or other programmable processing apparatus and/or system to produce a machine, such that the computer program instructions or software code which execute on the computer or other programmable processing apparatus, create the means for implementing the functions described herein.

In the present description, a block denoted as "means configured to perform ..." (a certain function) shall be understood as functional blocks comprising circuitry that is adapted for performing or configured to perform a certain function. A means being configured to perform a certain function does, hence, not imply that such means necessarily is performing the said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software and may implicitly include, without limitation, digital signal processor (DSP) hardware, network processor, application-specific integrated circuit (ASIC), field programmable gate array (FPGA), read-only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions or cause such benefits, advantages, or solutions to become more pronounced are not to be construed as a critical, required, or essential feature or element of any or all the claims.

## Claims

1. A computer-implemented migration method for use in a stream processing system comprising at least a reconfiguration manager, a first host, and a second host, the first host hosting at least a first window operator having a first window associated with a first window state, wherein:
- the reconfiguration manager is configured to initiate and manage a migration of the first window of the first window operator from the first host to the second host, comprising creating a second window operator at said second host, the second window operator having a second window associated with a second window state,
- the first and the second window operators being configured to receive a stream of data units, add the data units to the first and, respectively, the second window state, and trigger the first and, respectively, the second window to process or discard the data units in the first and, respectively, the second window state, the method comprising, synchronizing the first and the second window state so that the first and the second window states are consistent upon completion of the migration, wherein completion of the migration comprises starting processing data units by the second window operator and discarding data units by the first window operator.

2. The computer-implemented migration method, as claimed in claim 1, wherein processing the data units in the first or the second window state comprises performing a computational task, and the migration of the first window comprises migrating the first window state and the computational task.

3. The computer-implemented migration method, as claimed in any of claims 1 or 2, wherein synchronizing the first and the second window states comprises receiving a synchronization marker in the stream of data units and causing a window trigger based on said synchronization marker.

4. The computer-implemented migration method, as claimed in claim 3, wherein:
- the reconfiguration manager is further configured to create a temporary window operator before initiating the migration of the first window to the second host, said temporary window operator being configured as an upstream window operator with respect to the first and the second window operators, and
- said synchronization marker is inserted by said temporary window operator in the stream of data units received by the first and the second window operators.

5. The computer-implemented migration method, as claimed in claim 4, wherein the temporary window operator is configured to extract the metadata associated with the data units of the stream of data units and operate based on the metadata.

6. The computer-implemented migration method as claimed in claim 3, wherein:
- the first window operator is configured to duplicate the stream of data units to a temporary queue associated with the second window operator when the migration is initiated and
- said synchronization marker is inserted in the duplicated stream by the first window operator when the first window operator triggers the first window.

7. The computer-implemented migration method, as claimed in any of claims 1 or 2, wherein synchronizing the first and the second window states comprises configuring the same fixed window size for the first and the second window during the migration.

8. The computer-implemented migration method, as claimed in claim 7, wherein the first and the second windows have respectively a first and a second window size, and the fixed window size is determined by the reconfiguration manager as the smallest of the first and the second window sizes.

9. An apparatus comprising means for performing the migration method of any of claims 1 to 8.

10. A computer program product comprising instructions which, when executed by an apparatus, cause the apparatus to perform the migration method of any of claims 1 to 8.
